Europäisches Patentamt

European Patent Office

Office européen des brevets

(11) Publication number: **0 286 974**
**A2**

# (12) EUROPEAN PATENT APPLICATION

(21) Application number: **88105517.2**

(22) Date of filing: **07.04.88**

(51) Int. Cl.⁴: **F16K 5/10**

(30) Priority: **16.04.87 US 39627**

(43) Date of publication of application:
**19.10.88 Bulletin 88/42**

(84) Designated Contracting States:
**AT BE CH DE ES FR GB GR IT LI LU NL SE**

(71) Applicant: **CHIEF INDUSTRIES, INC.**
**P.O. Box 2078 West Highway 30**
**Grand Island Nebraska 68802(US)**

(72) Inventor: **Kreitler, Thomas Edward**
**662 West Lakeshore Drive**
**Lincoln Nebraska 68528(US)**

(74) Representative: **UEXKÜLL & STOLBERG**
**Patentanwälte**
**Beselerstrasse 4**
**D-2000 Hamburg 52(DE)**

(54) **Valving technique.**

(57) To reduce the amount of inert gas wasted during arc welding, the inert gas flowing through a conduit to the tip of the welding torch is blocked or released at a first location in the conduit by a solenoid controlled valve and regulated at a second location in the conduit with a precision flow rate regulator with a tolerance of at least 1 1/2 cubic inches per hour. The dead space between the solenoid controlled valve and the flow rate regulator is less than 4 cubic feet. The regulator is setable at any of a plurality of positions representing flow rates of inert gas.

FIG. 1

EP 0 286 974 A2

## VALVING TECHNIQUE

This invention relates to valving techniques and more particularly to valving techniques which reduce the loss of fluid.

One class of valve are known which include an inlet port, an outlet port and a flow-rate controlling valving section which includes at least first and second valve elements. The first and second valve elements are movable with respect to each other and one of them contains a plurality of valve openings of differing diameters, each communicating with either the inlet or the outlet port of the valve. The other valve element is adapted to close all but one of the valve openings. The particular valve opening that is open depends on the position of the valve elements with respect to each other.

It is known in some applications to include an on/off valve such as a solenoid-controlled valve. For example, such valves are used to control the flow of inert gas over the tip of an arc welding torch with the welder being able to control the valve by a manual control as he welds to permit it to open when gas is needed and to close when it is not needed.

In the prior art, gas control apparatuses such as those used in welding, the on/off valve is spaced a considerable distance from a regulator which steps the gas pressure down. It is typically the only valve in the line between the regulator and the outlet tip of the gas hose.

The prior art on/off valves of this type have a disadvantage in that fluid fills the space between the regulator and the on/off valve and when the valve is opened, the gas rushes from the hose at a rate of flow that is larger than desired, causing lost gas and irregular flow rate. If the regulator is located between the end of the fluid conduit and the on/off valve, the fluid after the on/off valve is lost when the valve is closed; and if it is located before the on/off valve, the fluid between the on/off valve and the regulator is not regulated and rushes out upon opening of the on/off valve and is lost.

One prior art type of flow-rate controlling valve, such as for example the valve disclosed in United States patent 3,558,100, includes a plurality of valve openings at spaced apart locations in the wall of a cylindrical chamber. The wall is movable about a stationary valve element to close all but one valve opening to an angularly extending outlet.

This valve has several disadvantages such as, for example: (1) it has considerable dead space within its cylindrical chamber which accumulates a substantial amount of unmetered volume of fluid; and (2) it is not designed to work close together with an on/off valve to serve as a regulator for gas that flows through the on/off valve and thus is not suitable for many applications.

Accordingly, it is a task of the invention to provide a valve arrangement in which a solenoid-controlled on/off valve and a relatively small precision valve for controlling flow rate are connected together with the precision valve having a height of less than 4 inches as its maximum dimension and a volume of less than 6 cubic inches.

In accordance with the invention, a valving method for welding in which inert gas flows from a source to a welding tip along a flow path in a manner controlled from a welding tourch and the flow is periodically interrupted at a solenoid at a first location along said path of flow is characterized in that the flow rate of said gas along said path is controlled at a second location within the shorter of two distances from the solenoid wherein the two distances are one foot or a distance which causes the volume of the flow path between the first and second locations to be less than 4 cubic inches.

The flow rate along said path is controlled from a location between the source of fluid and the solenoid valve, whereby the amount of unregulated fluid flowing through the first location upon opening the flow path at that point is reduced. Advantageously, the flow rate is adjusted to one of several increments by a precision valve, thus permitting flow through a valve inlet and a valve outlet of a flow rate regulating valve; and selecting a precision aperture within said valve in the path of said flow rate, whereby the flow rate is controlled by said precision aperture.

A welding system for practicing the method of claims having an arc welding torch; a source of inert gas; a solenoid for controlling the flow of gas to said arc welding torch from said source, whereby the gas flows only when needed; and a regulator characterized by a precision valve having a tolerence at least as precise as 1 1/2 cubic inches per hour located no more than 1 foot from said solenoid. The welding system is further characterized in that the regulator includes a valve setable at any of a plurality of positions representing flow rates of inert gas and includes precision apertures in the path of flow; said precision apertures having a tolerance at least as precise as 0.0005 inch.

The welding system is characterized in that said apertures have a range of diameters of between 0.017 to 0.030 inches and the valve includes a housing having an inlet port, an outlet port and a valving port with a valve stem adapted to extend into said valve port; and having a plurality of precision apertures circumferentially spaced about a hollow portion and a handle, by which said valve stem may be rotated, wherein said apertures may be positioned.

One of said inlet port and outlet port is aligned with said circumferential ring of openings and has an opening larger than any of said precision openings. This opening in said one of said inlet port and outlet port closes a flow path between the inlet port and outlet port through said housing when not aligned with an aperture and opens the path when said one of said precision apertures and one of said inlet port and outlet port are aligned. The solenoid valve is positioned adjacent to said valve elements with a fluid volume between the two of less than 4 cubic inches.

From the above description, it can be understood that the valving technique of this invention has several advantages such as: (1) it reduces the lost fluid in use of the valving technique when the flow of fluid is repetitively stopped and started; and (2) it permits precision control of the rate of flow of the fluid at selectable flow rates.

The above noted and other features of the invention will be better understood from the following detailed description when considered with reference to the accompanying drawings, in which:

FIG. 1 is a fragmentary, partly broken-away, partly-schematic view of a welding apparatus incorporating an embodiment of the invention;

FIG. 2 is an exploded perspective view showing two valves in accordance with the valving technique of the invention;

FIG. 3 is a sectional view illustrating the operation of a portion of the valves shown in FIG. 2; and

FIG. 4 is a sectional view through lines 4-4 of FIG. 3.

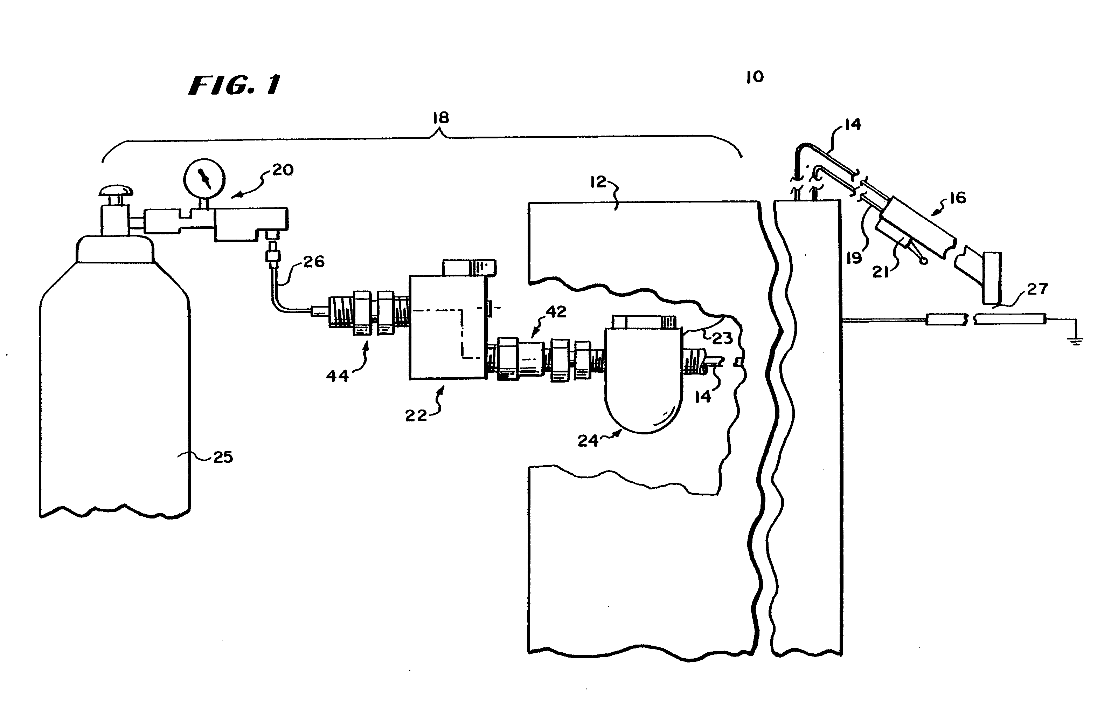

In FIG. 1, there is shown a welding system 10 having a welder control cabinet 12, an inert gas conduit 14, an arc torch 16, and an inert gas system 18. The welder control cabinet 12 includes the controls for setting the voltage for welding, the controls for automatic feed of the welding rods and the like as well as controls for the inert gas system 18 which is used in conjuction with the arc torch 16. An electrical cable 19 connects the arc torch 16 to the source of electrical power and controls within the welder control cabinet 12 and the inert gas system 18 communicates with the torch 16 through the conduit 14.

To supply inert gas over the tip of the arc welder 16 during welding, the inert gas system 18 includes a gas regulator 20, a gas flow-rate controlling valve 22, a solenoid valve 24, and the outlet conduit 14. The gas regulator 20 communicates at one end with a source of inert gas 25 at high pressure such as, for example, 2,500 psi (pounds per square inch).

The gas flow-rate contolling valve is located adjacent to the front panel of the welder control cabinet 12 and the solenoid valve 24 is located within the cabinet. The outlet of the gas regulator 20 provides gas to the gas flow-rate controlling valve 22 under reduced pressure, such as for example, between 25 psi and 50 psi. The gas flow-rate controlling valve 22 supplies the gas through the solenoid controlled valve 24 to the outlet conduit 14 which carries it to the tip of the welding torch to permit it to flow thereover at a controlled rate set by the gas flow-rate controlling valve 22.

Under good operating conditions, the gas flow-rate controlling valve 22 receives relatively constant pressure and is located close to the pressure regulator 20. However, it may be spaced from the pressure regulator 20 by a wide range of distances such as between 6 feet and 50 feet. On the other hand, the solenoid valve 24 and the gas flow-rate controlling valve 22 should be spaced from each other by a distance which maintains the volume of gas between them relatively low and should be spaced no more than 1 foot apart.

In the preferred embodiment, they are spaced between 1 inch and 2 inches, that space being the distance for a direct connection. The volume of gas between them should be no more than four cubic inches and is preferably less.

In the preferred embodiment, the gas flow-rate controlling valve 22 is threaded into a threaded inlet of the solenoid valve 24 but may be connected on either side or by any different mechanism, provided the volume of gas accommodated between them is sufficiently low to not cause significant economic loss if wasted during the welding operation by the starting and stopping of the flow of gas. The operator opens and closes the solenoid valve 24 to start and stop the flow of gas.

The gas flow-rate controlling valve 22 has at least one precision orifice to control the rate of flow of gas with a tolerance of 3 cubic inches per hour (a precision that causes the flow rate to fall within a range of plus or minus 3 cubic inches per hour). In the preferred embodiment, there are a plurality of selectable precision orifices.

To obtain that precision in the flow rate, the orifices must be adjustable within a tolerance of 0.0005 inches. For such adjustability, separate selectable orifices are used. The desired orifice is selected in accordance with the flow rate required. The selected precision orifice in the valve element has the required tolerance and matches with a larger orifice so that the precision orifice controls the size of opening through which the fluid flows and not its matching orifice which may be of lower precision.

As alternatives: (1) the matching orifice may be of the same size and of equal or greater tolerance; or (2) a single larger orifice may be used instead of the two matching orifices or the precision orifice may be adjustable provided the sizes are accurately adjustable such as by means of a vernier gauge or some equally accurate method of setting the rate of flow.

In the preferred embodiment, a larger matching opening is used and the position of the larger opening with respect to the precision orifice is controlled by a series of detents to be described hereinafter to insure proper registry of orifice and opening.

To permit control of the inert gas by an operator, a manual switch 21 is electrically connected to the solenoid-operated valve 24 so that the solenoid-operated valve 24 can be opened by depressing the switch 21 near the handle. This switch 21 is electrically connected through a conductor 23 within the cable 19 to the solenoid of the solenoid operated valve 24. The cable 19 also includes other conductors for providing power to the torch 16 and control signals. Of course, in some automatic equipment, the solenoid-operated valve 24 and torch will both be operated automatically and then the switch 21 is replaced by an automatic control. A foot control may also be used instead of a hand control.

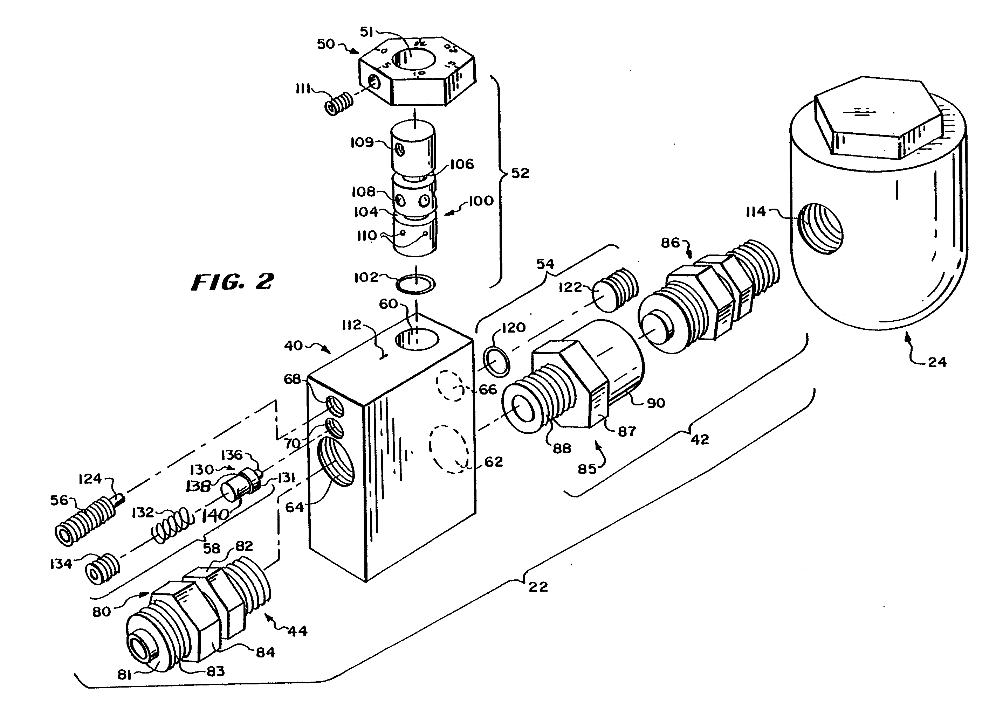

In FIG. 2, there is shown an exploded perspective view of the gas flow-rate valve 22 and the solenoid valve 24 connected to each other and to conduits 14 (Fig. 1) and 26 (Fig. 1). Conduit 26 connects the gas regulator 20 to the gas flow-rate controlling valve 22 and solenoid valve 24 is connected to conduit 14 to carry inert gas from the gas regulator 20 (FIG. 1) to the tip of the arc welding torch 16 (Fig. 1).

The solenoid valve 24 and the gas flow-rate controlling valve 22 are connected together for communication with each other at a threaded joint 42 in a manner to be described hereinafter so that gas is regulated in flow rate as it passes through the gas flow-rate controlling valve 22 and fed at that rate through the solenoid valve 24 when the solenoid valve 24 is opened. Otherwise, the flow of inert gas is blocked.

When the flow of gas is blocked by the solenoid operated valve 24, the solenoid-operated valve and the gas flow-rate controlling valve 22 confine between their valve elements only a small amount of gas. This confined gas, because it has already flowed through the gas flow-rate controlling valve 22, is free when the solenoid valve 24 is opened to flow at an uncontrolled rate. However, this confined gas is less than 4 cubic inches in volume.

The positions of the valves 22 and 24 may be reversed so that the solenoid-controlled valve 24 communicates directly with the pressure regulator 20 (Fig. 1) and the gas flow-rate controlling valve 22 communicates directly with the torch 16 (Fig. 1). With this arrangement, the gas between the solenoid-controlled valve 24 and the gas flow-rate controlling valve 22 is lost when the operator closes the solenoid-controlled valve 24 along with all of the gas between the solenoid-controlled valve 24 and the torch 16 because this part of the conduit 14 is open.

To control the rate of flow of inert gas through the open solenoid valve 24, the gas flow-rate controlling valve 22 includes a valve housing 40, an outlet assembly 42, a valve inlet assembly 44 and a valve element assembly. The valve element assembly includes a valve element handle 50, a valve stem assembly 52, a valve plug assembly 54, a valve guide element 56 and a detent assembly 58.

To control the rate of flow of inert gas through the valve housing 40, the valve stem assembly 52 is attached to the valve element handle 50 and extends within the housing 40 where it cooperates with the valve plug assembly 54, the valve guide element 56, the detent assembly 58, the inlet assembly 44 and the outlet assembly 42. The valve outlet assembly 42 and the valve inlet assembly 44 receive and transmit gas to be controlled by the valve.

The valve housing 40 is relatively small in volume and short in height to be able to fit at its location near the welder control cabinet 12 (Fig. 1) in a manner convenient to be operated, such as by a welder with gloves. In the preferred embodiment, it is a right regular parallelopiped having a height of 2 inches, width of 0.375 inches and a depth of 1.5 inches. It should not occupy a volume greater than 6 cubic inches nor have a height greater than 4 inches.

To receive the inlet assembly 44, outlet assembly 42 and valve element assembly, the valve housing 40 includes a valve stem opening 60, an outlet port 62, an inlet port 64, a plug opening 66, a valve guide opening 68 and a detent opening 70. These openings, respectively, are sized to conformingly receive the valve stem assembly 52, the outlet assembly 42, the inlet assembly 44, the plug assembly 54, the valve guide element 56 and the detent assembly 58.

To receive the valve stem assembly 52, the valve stem opening 60 is 0.350 diameter cylindrical bore substantially 0.375 inches deep and ending in an inverted truncated cone having a cylindrical opening at its tip (not shown in Fig. 2) The cylindrical opening communicates with the outlet port 62 and for that purpose has a short length and narrow diameter of less than 0.125 inches. It also communicates along its length with the inlet port 64.

The valve stem opening 60 must have sufficiently close tolerances to form a gas tight seal with the valve stem assembly 52 above the locations where it communicates with the inlet port 64 or the outlet port 62 and between these ports and the handle 50 to avoid the escape of gases. Its depth need only be sufficient to control the flow of gases between the inlet port 64 and the outlet port 62. It has a dead space sufficiently small to avoid a substantial volume of gas from filling the dead space and constituting gas that will flow at an unregulated flow rate when the solenoid-controlled valve 24 is opened.

The plug opening 66, valve guide opening 68 and valve detent opening 70 are provided to receive the plug assembly 54, guide element 56 and detent assembly 58 respectively at a location on one side of a seal between the valve stem assembly 52 and valve stem opening 60, with the inlet and outlet ports 64 and 62 respectively being on the opposite side of the seal. Because they are not in the direct flow path of the gas, their dimensions are not as critical as the dimensions that control the rate of flow of gas.

In the preferred embodiment, the valve guide opening 68 and valve detent opening 70 are 0.156 inch radius tapped holes adjacent to each other having their center lines 0.156 inches and 0.406 inches, respectively, from the top of the housing 40 and centered 0.375 from a side surface of the housing 40 so as to be located above the inlet port 64 on a narrow elevational side of the housing 40. They each include a different 0.293 counterbore, 0.235 inches deep, with a 10.24 UNC tap to receive the threaded portions of the guide element 56 and detent assembly 58 in a manner to be described hereinafter.

The plug opening 66 is on the opposite surface of the housing 40 above the outlet port 62 and is a tapped hole 1/4 inch deep engaging the valve stem opening 60 to permit insertion of an O-ring in a manner to be described hereinafter. It is located in the preferred embodiment 0.813 inches from the top of the housing 40.

To receive inert gas, the inlet port 64 is a 7/16 inch radius opening 0.844 inches deep communicating through a narrow cylindrical channel with the valve stem opening 60 and the outlet port 62 is similarly a 7/16 inch diameter opening which is engaged by the valve stem opening 60 and is, for that purpose, 0.875 inches deep. These openings may be of different dimensions but located below a seal made by the valve stem assembly 52 within the valve stem opening 60 in the housing 40.

The inlet and outlet ports 64 and 62 communicate with the valve stem opening 60 through relatively small apertures spaced apart a distance to minimize the dead volume between them. The communication between the inlet and outlet ports 64 and 62 is through only narrow orifices so that the totality of the dead space in the path between the two is less than 4 cubic inches. It must be sufficiently small to avoid excessive escape of inert gases during starting and stopping of the flow of gas during the welding operation since it together with the distance between the gas flow-rate valve 22 and the solenoid valve 24 form a space in which the flow rate of gas is not regulated.

The inlet assembly 44 includes a tubular cylindrical inlet valve connector (not separately numbered in Fig. 2) and a tubular cylindrical conduit connector 80 having a common central longitudinal axis, with the conduit connector fitting over a central sleeve portion of the valve connector between an outer annular flange 81 and an inner hexogonal head 82 of the valve connector. The conduit connector 80 includes a threaded portion 83 and a hexogonal head 84 for connection to a conduit to receive fluid.

To communicate with the outlet port 62 through the valve stem assembly 52, the inlet valve connector of the inlet assembly 44 includes an externally threaded portion for engaging the internal threads of the tapped inlet bore and an outlet nozzel portion on opposite sides of the sleeve portion mounted by the flange 81 and head 82.

The outlet assembly 42 includes a gas flow-rate controlling valve connector 85 and a solenoid-controlled valve connector 86 adapted to be connected together to permit communication between the gas flow-rate controlling valve and the solenoid-operated valve. The solenoid-controlled valve connector 86 is identical to the connector 44 in construction and will not be described further herein.

The gas flow-rate controlling valve connector 85 of the outlet port assembly 42 includes a central tubular hexogonal head 87, an externally threaded tubular member 88 extending from one side of the head 87 and an internally threaded tubular member 90 extending from the other side of the head 87. The head 87 has a diameter larger than the outlet port 62 and is used to tighten the connections. The internal threads on the portion 90 engage the external threads of the solenoid-controlled valve connector 86 to form a connection between the outlet port 62 and the inlet port of the solenoid-controlled valve 24.

To form a sealed connection with the outlet port 62, the externally threaded member has an outer diameter substantially the same as the inner diameter of the outlet port 62 and its external threads are adapted to engage the internal threads in the outlet port 62. With these connections, the gas flow-rate valve 22 is immediately adjacent to the inlet of the solenoid valve 24 when the connectors 85 and 86 are in place. This enables a conventional solenoid-operated valve for welding systems to be used with the valve 22 of this invention attached directly to it.

However, the solenoid-controlled valve may be positioned on the inlet side of the gas flow-rate valve 22 and the inlet port 64 and outlet port 62 may be changed in location and function so that the outlet port 62 receives an assembly to engage precision apertures on the valve stem assembly 52 and is positioned higher than the inlet port 64, with the inlet port 64 receiving an assembly which does not communicate directly with precision apertures in the valve stem 52 and is located lower than the outlet port 62.

To control the flow of fluid, the valve stem assembly 52 includes a shank portion 100 and an O-ring 102. The shank portion 100 is elongated and generally in the form of a cylinder having an O-ring groove 104, an aligning groove 106, a plurality of circumferentially spaced-apart detent holes 108, and a plurality of precision apertures with different diameters 110. The aligning groove 106 and detent holes 108 are positioned above the O-ring 104 and the precision apertures 110 are below the O-ring groove 104.

To permit sealing of the valve, the shank portion 100 of the valve spindle 58 has an outer diameter of substantially the same size as the inner diameter of the valve spindle opening 60 and the O-ring groove 104 is adapted to receive the O-ring 102 which fits tightly therein with a compressing fit against the inner walls of the valve stem opening 60 to seal the valve stem at that point while permitting it to rotate. The shank portion 100 above the O-ring groove 104 is solid but in the portion below it, there is a relatively small internal cavity through which the precision apertures 110 extend.

To hold the shank portion 100 in place, the aligning groove 106 circumscribes the shank portion 100 above the O-ring groove 104 and is sized to cooperate with the tip of the valve guide element 56 which can be threaded in place to grip the shank portion 100 while permitting it to rotate, with the tip of the valve guide element 56 moving with respect to the internal walls of the aligning groove 106.

To enable proper registration of the precision apertures 110 with the inlet opening 64 and the inlet port assembly 44, the detent holes 108 are circumferentially spaced apart in a manner to conform with the precision apertures 110. In the preferred embodiment in which there is perfect registration between the orifice in the valve seat cylinder 84 and a selected one of the precision apertures 110, there is one detent opening for each of the precision apertures 110. However, if partial openings were desired, there may be two or more detent openings for each of the precision apertures 110.

The detent holes 108 are designed to cooperate with the detent assembly 58 which spring biases a member into each opening for enabling easy registration as an operator turns the valve stem assembly 52 by rotating the handle 50. The operator can feel the positioning of the detents corresponding to precision orifices 110 in the shank portion 100.

To control the flow rate, the precision apertures 110 each have a precision opening with a tolerance in its diameter of 0.0005 inch. The precision apertures 110 each have a different diameter corresponding to a different flow rate with the diameters being in the range of 0.017 to 0.030 inches. These diameters correspond to flow rates at the standard flow pressures provided by a regulator and conventional arc welding equipment. There are six such precision apertures in that range corresponding to 15 cubic feet per hour, 20 cubic feet per hour, 25 cubic feet per hour, 30 cubic feet per hour, 35 cubic feet per hour and 40 cubic feet per hour.

However, any number of precision orifices and different precisions and diameters for the precision orifices may be used and they may correspond to different flow rates for the same size or to the same flow rate but have different sizes, depending on the nature of the inert gas used or other fluid used. Such apertures may be tailored from valve to valve depending on the circumstances but in the preferred embodiment, they are selected for the conventional metal inert gases and tungsten inert gases now in use in welding systems.

To permit easy adjustment by an operator, the valve element handle 50 is hexogonal in shape and has a distance between opposite flats of the hexagon of 1 inch. This size is selected to permit easy gripping by an operator who may have gloves on. However, obviously other shapes may be used and the handle will still be operable. Moreover, the rotation can be done automatically with automatically controlled equipment if desired in a manner known in the art.

In the preferred embodiment, the surface of the handle is flat and increments corresponding to the precision apertures 110 are marked thereon to indicate the cubic feet of flow through the precision apertures 110 with that position of rotation. Indicia are alignable with a mark 112 on the housing 40 and are indicated by the cubic feet of flow per hour such as 15, 20, 25, 30, 35 and 40.

To mount the handle 50 to the shank 100 of the valve stem assembly 52, the handle 50 has a cylindrical opening through it of the same diameter as the diameter of the shank 100 and both the handle 50 and the shank 100 have tapped holes at an angle to the hole 51 and parallel to the flat surfaces of the handle 50. The tapped hole through the shank 100 is shown at 109 and is aligned with a corresponding tapped hole in the handle 50 with a set screw 111 being adapted to be threaded through both tapped holes to hold the handle to the shank 100.

In the preferred embodiment, the solenoid valve 24 is a conventional solenoid-controlled valve of the type now utilized in welding equipment although a precision flow rate controlling valve or regulator may be used in connection with any suitable valve that provides opening and closing. Conventional welding solenoid-controlled valves include a threaded opening, such as the one shown at 114, adapted to receive the threaded cylinder 90 at the outlet of the gas flow-rate controlling valve 22. Because of this conventional connection, the gas flow-rate controlling valve 22 can be mounted immediately adjacent to the solenoid-controlled valve 24 to keep the dead space between the two at a minimum.

The O-ring 102 fits within the grove 104 and extends only slightly beyond it. With this arrangement, the O-ring 102 can be inserted with the shank 100 into the valve opening 60 and to provide a sealing function.

To permit easy sealing of the inlet port assembly 44, the plug assembly 54 includes an O-ring 120 and a threaded member 122 having external threads matching internal threads on the plug opening 66. This opening intersects with the valve stem opening 60 at a location corresponding to the inlet port 64 and permits adjustment of the O-ring 120 for better sealing of the inlet port 64. It forms a conformingly tight seal which in the preferred embodiment is gas tight.

To permit the valve stem assembly 52 to be held in place, the valve guide element 56 has an outer diameter corresponding to the inner diameter of the opening 68 and external threads matching internal threads therein. It contains on its outer end, means to accommodate an allen wrench to permit it to be threaded into place and on its forward end has a substantially smaller member 124 sized to fit within the groove 106 conformingly. With this arrangement, the guide member 56 can be threaded into a location where its tip 124 fits into the guide groove 106 to hold the valve stem assembly 52 in place while permitting its shank 100 to rotate with respect to the housing 40.

To permit accurate registration of the valve element opening in the valve inlet port 64 with the precision apertures 110, the valve detent assembly 58 includes a detent member 130, a helical compression spring 132 and a retaining member 134. The detent member 130 has: (1) a cylindrical center portion 131 having an outer diameter substantially conforming to the inner diameter of the detent opening 70; (2) a nipple 136 on the forward end of the center portion of substantially the same diameter as the diameter of the detent holes 108 on the shank portion 100 of the valve spindle assembly 52; and (3) a reduced diameter cylindrical end portion 140 formed by an annular shoulder at 138 sized to receive one end of the helical compression spring 132 about an extending cylindrical end portion 140.

With this arrangement, one end of the helical compression spring 132 fits over and about the reduced diameter 140 formed by the shoulder 138 opposite the detent member 136 to bias it into the detent holes 108 but permit it to be retracted a sufficient distance to permit easy rotation of the valve stem assembly 52 by the valve element handle 50. The retaining member 134 has external threads conforming to the internal threads of the tapped detent opening 70 and is cylindrical to permit it to be threaded in place and properly bias the detent element 130.

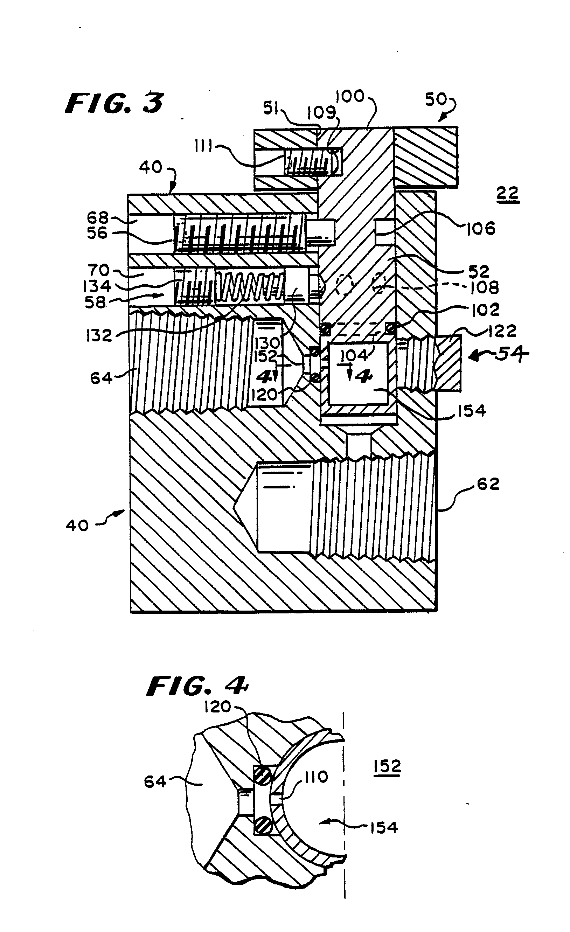

In FIG. 3, there is shown a sectional view of the gas flow-rate valve 22 having the valve stem assembly 52, guide assembly 56, detent assembly 58 and plug assembly 54 in place illustrating the manner in which the parts cooperate.

As shown in this view, the valve element handle 50 rests upon the top of the housing 40 with the valve stem assembly 52 conformingly fitting within the housing 40 and receiving the valve guide element 56 within the annular groove 106 to hold it in place. The opening 68 permits a allen wrench to be inserted to thread the valve guide element 56 into the annular groove 106 with a fit sufficient to permit rotation of the valve element handle 50 and yet hold the valve spindle stem 52 in place.

Similarly, the detent element 130 is biased by the helical compression spring 132 into one of the detent holes 108 by the proper positioning of the retaining member 134. The retaining member 134 is a set screw that can be threaded and adjusted by a allen wrench to permit the detent element 130 to be retracted a sufficient distance against the pressure of the helical compression spring 132 with normal turing pressure from the handle 50 by an operator to rotate the valve element handle 50 and turn the valve stem assembly 52 from position to position.

The inlet port 64 receives the inlet assembly 44 (Fig. 2) and permits the flow gas through a valve seat opening 152 having a diameter slightly more than 0.030 inches and through precision apertures 110 (FIG. 2) into the chamber 154 where it may flow downwardly into the outlet port 62 and to the solenoid valve 24 (Fig. 2).

The valve seat opening 152 and precision apertures 110 are sealed together by the O-ring 120 to prevent the escape of gas while permitting rotation from precision orifice to precision orifice. The threaded member 122 may be removed to place the O-ring 120 in place before inserting the valve stem assembly 52 and thus permit good sealing.

In FIG. 4 there is shown a sectional view of the opening 152 taken through lines 4-4 of FIG. 3 showing the end portion of the inlet port 64, the O-ring 120, a precision orifice 110, and a portion of the chamber 154. As best shown in this view the precision orifices 110 control the rate of flow of fluid so as to provide good regulation.

In operation, pressure at a regulated flow rate is applied to a valve arrangement which includes a gas flow-rate control valve 22 and a solenoid-controlled open and close valve 24 that is either fully opened to pass gas at the largest flow rate permitted by the flow-rate control valve 22 or to completely block the flow of gas. The outlet of the valve system communicates with the tip of a welding torch 16 so that the solenoid valve 24 can be open and closed by an operator or by automatic equipment to cause fluid to flow.

To supply the appropriate pressure to the valve arrangement, the gas regulator 20 is connected at one end to a source of high pressure inert gas at approximately 1,500 psi. Its other end is applied through a hose of approximately 6 feet or so to the gas flow-rate valve 22 at its inlet. This flow regulator is adjusted for flow at a rate of 15 cubic feet per hour, 20 cubic feet per hour, 25 cubic per hour, 30 cubic feet per hour or 35 cubic feet per hour by the turning of a handle 50. Discrete increments are controlled by a mechanism that permits exact adjustment at predetermined flow rates.

As the valve element handle 50 is turned, it rotates the valve spindle assembly 52 with the end 124 of the valve guide element 56 rotating in the annular groove 106 to permit smooth rotating from location to location. When the precision apertures 110 are aligned with the valve seat opening 152, the detent element 130 is biased by the helical compression spring 132 to force its tip into a detent hole 108 aligned with the orifice so that the operator knows the orifices are aligned in sealing arrangement to permit flow at a controlled rate.

This flow of fluid from the source is through a chamber 154 (FIG. 3) into the outlet port 62 to the solenoid-controlled valve 24 (Fig. 2) and occurs only when the valve 24 has been opened. The dead space between the valve seat opening 152 and the solenoid valve 24 (Fig. 2) is lower in volume than 4 cubic inches and the two are closer together than 1 foot so that only a limited amount of dead space exists between the two to enable only a limited amount, no more than 4 cubic inches, of fluid to flow through the valve system.

To cause inert gas to flow over the tip of the welding torch, the operator depresses the operating button 21 causing the solenoid valve 24 to open and permit gas at a regulated flow rate to flow from the source of high-pressure gas through the gas regulator 20, the valve arrangement including the gas flow-rate control valve 22 and solenoid valve 24 and the hose 14 to the tip 27 of the torch 16.

As can be understood from the above description, the valving arrangement of this invention has several advantages such as: (1) it prevents the excessive waste of gas due to flow from dead space in the gas conduit; and (2) it permits adjustment for accurate flow rate to the tip of the welding arc.

While a valving system for inert gas has been described, the valving system may be applied to other gases and to liquids. Moreover, the selection of a control orifice can be made in other ways such as by linear movement of a flat plate between inlet and outlet of the valve.

While a preferred embodiment has been described with some particularity, many modifications and variations can be made in the preferred embodiment without deviating from the invention. Therefore, it is to be understood, that within the scope of the claims, the invention may be practiced other than as specifically described.

## Claims

1. A valving method for welding in which inert gas flows from a source (25) to a welding tip (27) along a flow path (e.g., 20, 44, 22, 41) in a manner controlled from a welding tourch (16) and the flow is periodically interrupted at a solenoid (24) along said path of flow characterized in that the flow rate of said gas along said path is controlled at a second location (22) within the shorter of two distances from the solenoid (24), wherein the two distances are one foot or a distance which causes the volume of the flow path between the first and second locations to be less than 4 cubic inches.

2. A method according to claim 1 characterized in that the step of controlling the flow rate along said path includes the step of controlling the flow rate from a location (22) between the source of fluid (25) and the solenoid valve (24), whereby the amount of unregulated fluid flowing through the first location (22) upon opening the flow path at that point is reduced.

3. A method in accordance with claim 1 or 2 characterized in that the flow rate is adjusted to one of several increments by a precision valve (22).

4. A method in accordance with any of claims 1-3 characterized by permitting flow through a valve inlet (64) and a valve outlet (62) of a flow rate regulating valve (22); and selecting a precision aperture (110) within said valve in the path of said flow rate, whereby the flow rate is controlled by said precision aperture.

5. A welding system for practicing the method of claims 1-4 in which an arc welding torch (16); a source of inert gas (25); and a solenoid (24) for controlling the flow of gas to said arc welding torch (16) from said source (25), whereby the gas may flow only when needed; characterized by a regulator (22) with a precision having a tolerence of at least as precise as 1 1/2 cubic inches per hour; and nc more than 1 foot from said solenoid (24).

6. A welding system in accordance with claim 5 characterized in that the regulator (22) includes a valve setable at any of a plurality of positions (e.g., 50, FIG. 2) representing flow rates of inert gas and including precision apertures (110) in the path of flow; said precision apertures (110) having a tolerance at least as precise as 0.0005 inch.

7. A welding system in accordance with claims 5 or 6 characterized in that said apertures (110) have a range of diameters of between 0.017 to 0.030 inches.

8. A welding system characterized in that the valve (22) includes a housing (40) having an inlet port (64), an outlet port (62); and a valving port (60) with a valve stem (52) adapted to extend into said valving port (60) and having a plurality of precision apertures (110) circumferentially spacing a hollow portion (100) at spaced apart locations and a handle (50), by which said valve stem (52) may be rotated wherein said apertures (110) may be positioned; one of said inlet port (64) and outlet port (62) being aligned with said circumferential ring of openings;

said one of said inlet port (64) and outlet port (62) having an opening (108) larger than any of said precision openings (110); and

said opening (108) in said one of said inlet port (64) and outlet port (62) closing a flow path between the inlet port (64) and outlet port (62) through said housing and opening (108) the path when said one of said precision apertures (110) and said opening (108) and said one of said inlet port (64) and outlet port (62) are aligned.

9. A valving arrangement in accordance with any of claims 5-9 characterized in that the solenoid valve (24) is positioned adjacent to said valve elements (22) with a fluid volume between the two of less than 4 cubic inches.

**FIG. 1**

0 286 974

FIG. 2

0 286 974

FIG. 3

FIG. 4